# EUROPEAN PATENT APPLICATION

(11) **EP 1 589 767 A1**
(43) Date of publication of application: **26.10.2005**
(21) Application number: 03777186.2
(22) Date of filing: 03.12.2003
(51) Int. Cl.: H04N 7/32, H04N 7/08, H04N 5/92

(54) **MOVING PICTURE ENCODING METHOD AND MOVING PICTURE DECODING METHOD**

(30) Priority: 17.01.2003 JP 2003010297
(71) Applicant: MATSUSHITA ELECTRIC INDUSTRIAL CO., LTD., Kadoma-shi, Osaka 571-8501 (JP)
(72) Inventor: KADONO, Shinya, Nishinomiya-shi, Hyogo 662-0871 (JP)
(74) Representative: Eisenführ, Speiser & Partner
(86) International application number: PCT/JP2003/015454
(87) International publication number: WO 2004/066635

(57) **Abstract**

A moving picture coding apparatus (1) includes: a map creation unit (113) for creating variable speed reproduction information Map that is information necessary for variable speed reproduction according to a picture type Ptype; a variable length coding unit (112) for coding the variable speed reproduction information Map and placing it in a bit stream Str; a detection unit (114) for detecting the need of coding a picture parameter set PPS referred to by a current picture to be coded; and a common information addition unit (115) for adding the picture parameter set PPS to the current picture to be coded when the detection unit (114) detects the need of coding the picture parameter set PPS.

## Description

### Technical Field

The present invention relates to a moving picture coding method for coding moving pictures so as to reproduce them at variable speed, a moving picture decoding method for decoding a stream which has been so coded generated by such coding, and the stream.

### Background Art

In the age of multimedia which integrally handles audio, video and other pixel values, existing information media, i.e., newspapers, magazines, televisions, radios, telephones and other means through which information is conveyed to people, have recently come to be included in the scope of multimedia. Generally, multimedia refers to something that is represented by associating not only characters but also graphics, voices, and especially pictures and the like together, but in order to include the aforementioned existing information media in the scope of multimedia, it appears as a prerequisite to represent such information in digital form.

However, when calculating the amount of information contained in each of the aforementioned information media as the amount of digital information, while the amount of information per character is 1~2 bytes, the amount of information to be required for voice is 64Kbits or over per second (telephone quality), and 100Mbits or over per second for moving pictures (current television reception quality), and thus it is not realistic for the aforementioned information media to handle such an enormous amount of information as it is in digital form. For example, although videophones are already in the actual use via Integrated Services Digital Network (ISDN) which offers a transmission speed of 64Kbps/s~1.5Mbps/s, it is not practical to transmit video shot by television cameras directly through ISDN.

Against this backdrop, information compression techniques have become necessary, and moving picture compression techniques compliant with H.261 and H.263 standards suggested by ITU-T (International Telecommunication Union - Telecommunication Standardization Sector) are employed for videophones, for example. Moreover, according to information compression techniques compliant with the MPEG-1 standard, it is possible to store picture information in an ordinary music CD (compact disc) together with sound information.

Here, MPEG (Moving Picture Experts Group) is an international standard on compression of moving picture signals standardized by ISO/IEC (International Standards Organization/International Electrotechnical Commission), and MPEG-1 is a standard for compressing moving picture signals, namely, television signal information, approximately into one hundredth. Furthermore, since MPEG-1 targets for moderate picture quality which can be realized by a transmission speed of about 1.5Mbps, MPEG-2, which was standardized with a view to satisfy requirements for further improved picture quality, allows data transmission of moving picture signals at a rate of 2~15Mbps so as to realize TV broadcasting quality.

Under the present situation, MPEG-4 that achieves a higher compression ratio than that of MPEG-1 and MPEG-2, allows coding, decoding and operation in the unit of an object, and realizes new functions required for the multimedia age, has been standardized by the working group (ISO/IEC JTC1/SC29/WG11) which has been engaged in the standardization of MPEG-1 and MPEG-2. MPEG-4 was initially aimed at standardization of a coding method for a low bit rate, but now it is extended to standardization of a more versatile coding method further including interlaced images and higher bit rates. Furthermore, ISO/IEC and ITU-T are now jointly making efforts to standardize MPEG-4 AVC and ITU H.264 as a next-generation picture coding method that allows a still higher compression ratio. As of May 2002, a next-generation picture coding method called Committee Draft (CD) has been issued (See Text of Committee Draft of Joint Video Specification (ITU-T Rec. H.264 | ISO/IEC 14496-10 AVC) 0.4 'Overview of the syntax' 0.4.1 'Temporal processing' 8.2.2 'Parameter set decoding', for example).

Generally in the moving picture coding, the amount of information is compressed by reducing redundancies in the spatial and temporal directions. In the inter picture prediction coding for reducing the temporal redundancies, motion of a current picture is estimated and its predictive picture is obtained on a block-by-block basis with reference to a temporarily forward or backward picture, and the difference between the predictive picture and the current picture is coded. Here, the term "picture" represents a single sheet of an image, and it represents a frame when used in a context of a progressive image, whereas it represents a frame or a field in a context of an interlaced image. The interlaced image here is an image corresponding to a single frame that is made up of two fields having different times respectively. In the process of coding and decoding the interlaced image, a single frame can be handled as a frame itself, as two fields, or as a frame structure or a field structure on every block in the frame.

A picture which is intra picture prediction coded with reference to no picture is called an I-picture. A picture which is inter picture prediction coded with reference to only one picture is called a P-picture. And a picture which is inter picture prediction coded with reference to two pictures at the same time is called a B-picture. A B-picture can be coded with reference to two pictures of arbitrary combinations of preceding and subsequent pictures in display order. Reference pictures can be specified on every block that is a basic unit for coding and decoding, but distinction is made between a first reference picture that is described earlier in a bit stream obtained by coding and a second reference picture that is described later there. These reference pictures must have been already coded and decoded for coding and decoding above-mentioned pictures.

Motion compensation inter picture prediction coding is used for coding P-pictures and B-pictures. Motion compensation inter picture prediction coding is a coding method by inter picture prediction coding to which motion compensation is applied. Motion compensation is a method for improving prediction accuracy and reducing an amount of data by estimating an amount of motion (hereinafter referred to as a motion vector) of each region in a picture and performing prediction in consideration of the estimated motion, not performing prediction just based on pixel values of reference pictures. For example, an amount of data is reduced by estimating a motion vector of a current picture to be coded and coding a prediction error between the current picture and a predictive picture that is obtained by shifting the current picture by an amount of that motion vector. Since this method requires motion vector information for decoding, the motion vector is also coded and recorded or transmitted.

A motion vector is estimated per macroblock or block. To be more specific, a motion vector is estimated by fixing a macroblock or a block in a current picture to be coded, moving a macroblock or a block in a reference picture within a search range and then estimating a location of the reference macroblock or blork which is most similar to the fixed macroblock or block.

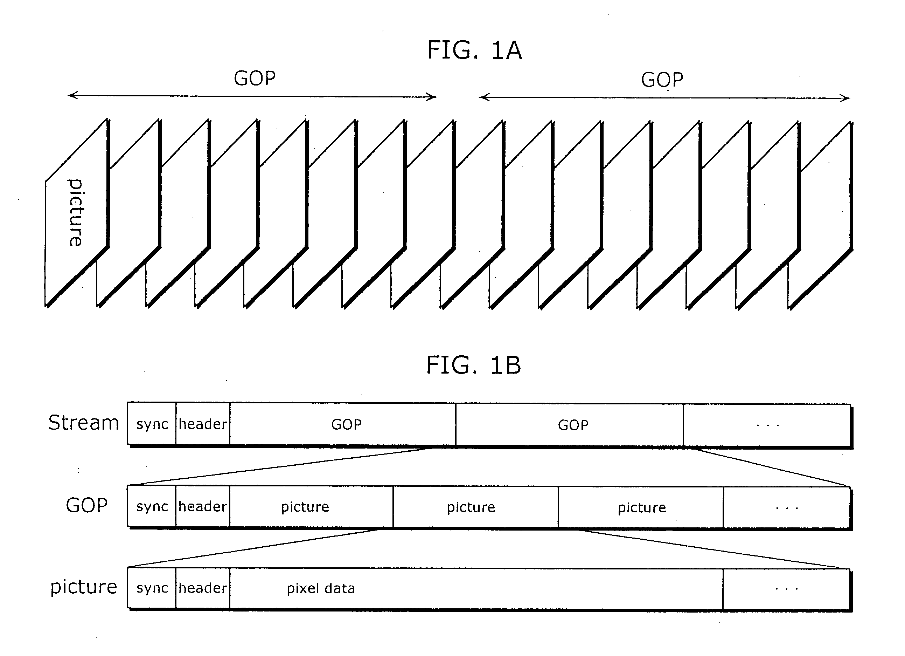

FIG. 1A and FIG. 1B are structure diagrams of a conventional MPEG-2 stream, and more specifically, FIG. 1A shows a sequence of pictures and FIG. 1B shows a hierarchical structure of a stream. As shown in FIGs. 1A and 1B, an MPEG-2 stream has the following hierarchical structure. A stream is made up of a plurality of groups of pictures (GOPs), and editing of and random access to a moving picture can be done based on this GOP as a basic unit for coding processing. A group of pictures is made up of a plurality of pictures, namely, I-pictures, P-pictures or B-pictures. Each of a stream, a GOP and a picture as a unit includes a synchronizing signal (sync) indicating a separation of each unit and a header that is data common to the unit.

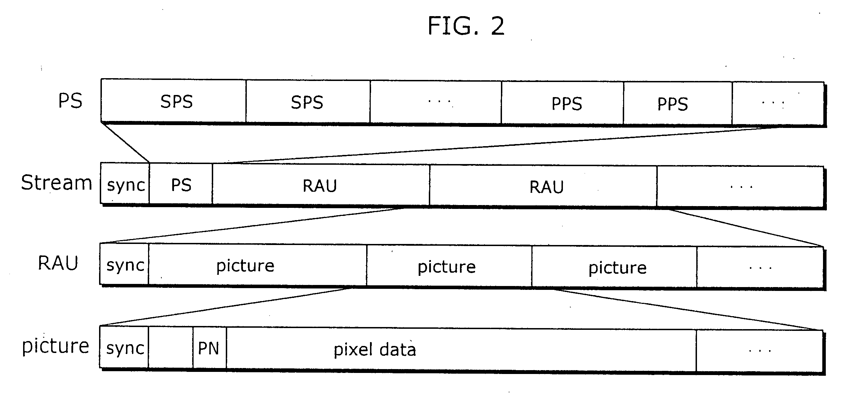

FIG. 2 is a diagram showing another hierarchical structure of a conventional stream. This stream corresponds to a stream for JVT (H.264/MPEG-4 AVC) which is now being developed jointly by ITU-T and ISO/IEC for standardization. JVT has no concept of a header, and common data called a parameter set PS is placed at the head of the stream. Also, JVT has no concept of a GOP, but a random-accessible unit that corresponds to a GOP can be structured by dividing data per special unit of pictures that can be decoded independent of other pictures. This unit is referred to as a random access unit RAU.

There are two types of a parameter set PS: a picture parameter set PPS that is data corresponding to a header of each picture; and a sequence parameter set SPS corresponding to a header of each GOP or sequence of MPEG-2. Each picture is assigned an identifier indicating which one of a plurality of candidate picture parameter sets PPSs and sequence parameter sets SPSs the picture is to refer to. To be more specific, a plurality of sets of PPSs and SPSs are coded only once and an identifier indicates which one of the sets each picture is to refer to, and thus it is possible to omit waste of coding a header (or a parameter set) of the same value repeatedly in each picture of MPEG-2, so as to improve a compression ratio.

A picture number PN is an identification number for identifying a picture. A sequence parameter set SPS includes the maximum number of reference pictures, a picture size and others, and a picture parameter set PPS includes a type of variable length coding (Huffman coding and arithmetic coding are switched), an initial value for a quantization step, the number of reference pictures and others.

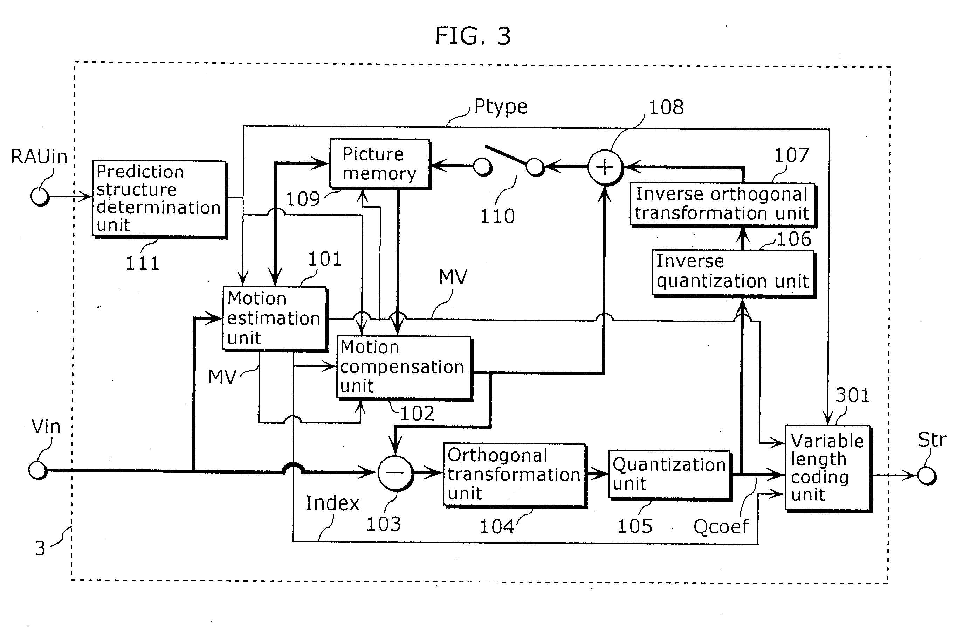

FIG. 3 is a block diagram showing a structure of a moving picture coding apparatus that realizes a conventional moving picture coding method.

A moving picture coding apparatus 3 is an apparatus for compressing and coding an inputted picture (image) signal Vin and outputting an bit stream Str obtained by transformation such as variable length coding, and includes a motion estimation unit 101, a motion compensation unit 102, a subtraction unit 103, an orthogonal transformation unit 104, a quantization unit 105, an inverse quantization unit 106, an inverse orthogonal transformation unit 107, an addition unit 108, a picture memory 109, a switch 110, a prediction structure determination unit 111 and a variable length coding unit 301.

The image signal Vin is inputted to the subtraction unit 103 and the motion estimation unit 101. The subtraction unit 103 calculates a differential value between the inputted image signal Vin and a predictive image and outputs it to the orthogonal transformation unit 104. The orthogonal transformation unit 104 transforms the differential value into a frequency coefficient and outputs it to the quantization unit 105. The quantization unit 105 quantizes the inputted frequency coefficient and outputs a quantized value Qcoef to the variable length coding unit 301.

The inverse quantization unit 106 inverse-quantizes the quantized value Qcoef to reconstruct it as the frequency coefficient and outputs it to the inverse orthogonal transformation unit 107. The inverse orthogonal transformation unit 107 performs inverse frequency transformation on the frequency coefficient into a pixel differential value and outputs it to the addition unit 108. The addition unit 108 adds the pixel differential value and the predictive image outputted from the motion compensation unit 102 so as to be a decoded image. The switch 110 turns ON when it is instructed to store the decoded image (picture), and the decoded picture is stored in the picture memory 109.

On the other hand, upon receipt of the image signal Vin per macroblock, the motion estimation unit 101 searches the decoded pictures stored in the picture memory 109 to estimate an image area which is most similar to the inputted image signal and determines a motion vector MV pointing the location of the image area. Motion vectors are estimated per block which is a unit smaller than a macroblock. Since a plurality of pictures can be used as reference pictures for that purpose, an identification number (a reference index Index) for specifying a reference picture is needed for each block. It is possible to specify a reference picture by the reference index Index indicating correspondence between a picture number of each picture in the picture memory 109 and its reference picture.

The motion compensation unit 102 extracts an image area which is most suitable for a predictive image from decoded pictures stored in the picture memory 109 using the motion vector MV and the reference index Index estimated by the above processing.

If a current picture is a random access unit start picture RAUin indicating the start position of a random access unit RAU, the prediction structure determination unit 111 instructs the motion estimation unit 101 and the motion compensation unit 102 to code (perform intra picture coding on) the current picture as a special picture that can be random accessed, depending on its picture type Ptype. And the prediction structure determination unit 111 outputs the picture type Ptype to the variable length coding unit 301.

The variable length coding unit 301 performs variable length coding on the quantized values Qcoef, the reference indices Index, the picture types Ptype and the motion vectors MV so as to be a bit stream Str.

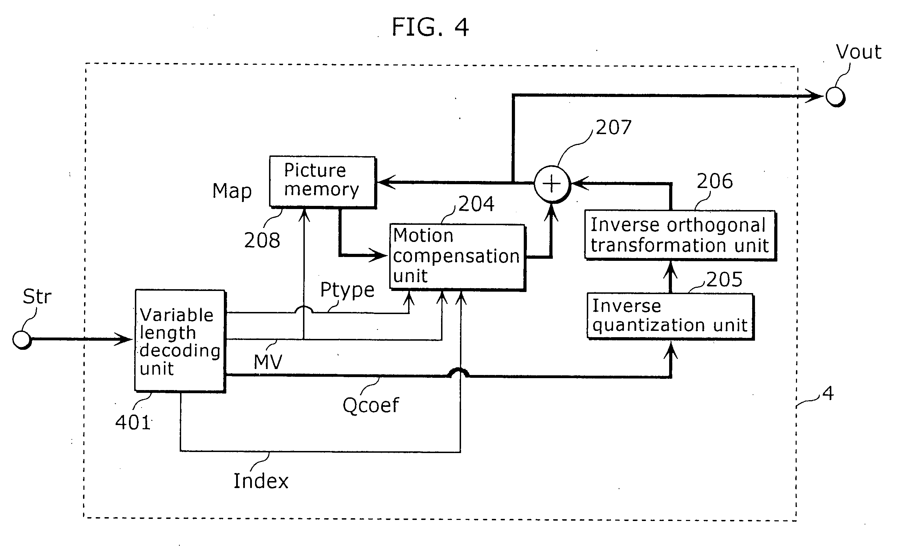

FIG. 4 is a block diagram showing a structure of a moving picture decoding apparatus that realizes a conventional moving picture decoding method. In this figure, the same reference numbers are assigned to the units that operate in the same manner as the moving picture coding apparatus that realizes the conventional moving picture coding method as shown in FIG. 3, and the explanation thereof is omitted.

The variable length decoding unit 401 decodes a bit stream Str and outputs quantized values Qcoef, reference indices Index, picture types Ptype and motion vectors MV. The quantized values Qcoef, the reference indices Index and the motion vectors MV are inputted to the picture memory 208, the motion compensation unit 204 and the inverse quantization unit 205 and decoded, and the operation of the decoding is same as that performed by the conventional moving picture coding apparatus as shown in FIG. 3.

However, decoding can be performed using only the pictures in the random access unit RAU itself, but information for variable speed reproduction, which is important for a storage apparatus such as a VTR and a disc recorder, cannot be obtained using the conventional JVT coding method and its stream. This is because JVT has introduced a very flexible inter picture prediction structure in order to improve coding efficiency (compression ratio) substantially.

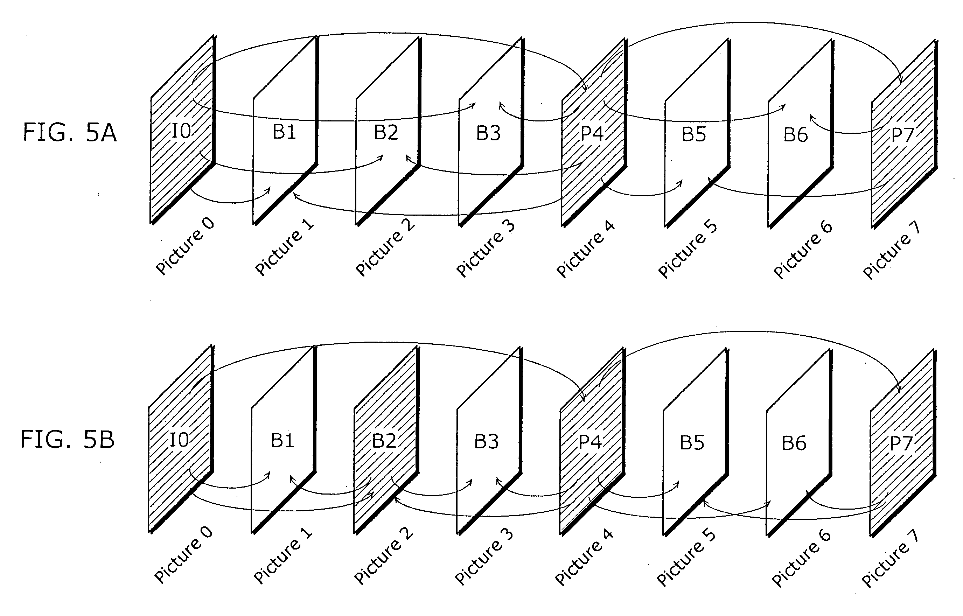

FIG. 5A and FIG. 5B are schematic diagrams showing examples of reference relationships between pictures. FIG. 5A is a prediction structure between pictures used in MPEG-2. Diagonally shaded pictures in this diagram are referred to other pictures. In MPEG-2, P-pictures (P4 and P7) can be predictively coded with reference to only one I-picture or P-picture immediately preceding in display order. B-pictures (B1, B2, B3, B5 and B6) can be predictively coded with reference to one I-picture or P-picture immediately preceding in display order and one I-picture or P-picture immediately subsequent in display order. In addition, the order in which pictures are arranged in a stream is determined, and I-pictures and P-pictures are arranged in display order, while B-pictures are arranged immediately subsequent to I-pictures or P-pictures which are to be displayed immediately after the B-pictures. As a result, the following three types of decoding can be performed: i) decoding of all the pictures; ii) decoding of only the streams of I-pictures and P-pictures for display of only the I-pictures and the P-pictures; and iii) decoding of only the streams of I-pictures for display. Therefore, three types of high-speed reproduction can be realized easily: i) normal-speed reproduction; ii) medium-speed reproduction; and iii) high-speed reproduction.

In JVT, B-pictures can also be predictively coded with reference to B-pictures. FIG. 5B shows an example of prediction in JVT, where B-pictures (B1 and B3) refer to a B-picture (B2). In this example, the following four types of decoding can be realized: i) decoding of all the pictures; ii) decoding of only the streams of reference I-pictures, P-pictures and B-pictures for display; iii) decoding of only the streams of I-pictures and P-pictures for display of only the I-pictures and the P-pictures; iv) decoding of only the streams of I-pictures for display.

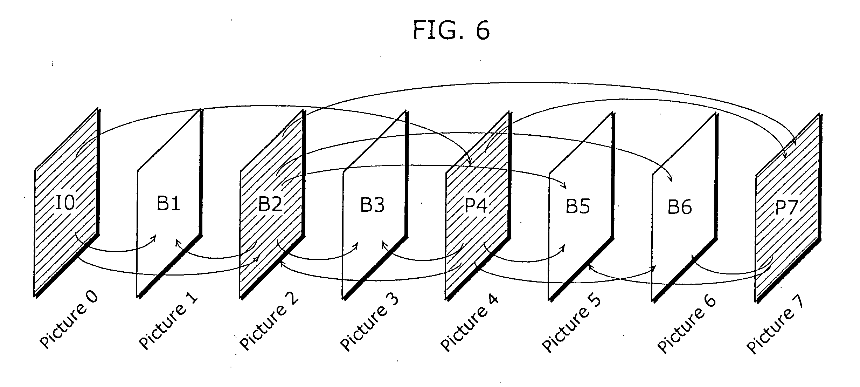

Furthermore, P-pictures can refer to B-pictures in JVT, and a P-picture (P7) can refer to a B-picture (B2) as shown in FIG. 6. In this case, since the P-picture (P7) cannot be decoded unless the B-picture (B2) has not yet been decoded, the following three types of decoding can be realized: i) decoding of all the pictures; ii) decoding of only the streams of reference I-pictures, P-pictures and B-pictures for display; and iii) decoding of the streams of I-pictures for display.

As mentioned above, since JVT accepts a very flexible prediction structure, it is not known what kind of variable speed reproduction can be realized unless an actual prediction structure is unknown. Therefore, only the following two types of decoding, at most, can be realized independent of the prediction structure in view of the examples in FIGs. 5A, 5B and 6: i) decoding of all the pictures; and ii) decoding of only the streams of I-pictures for display. These are too few choices, compared with the number of variable speed reproductions realized by MPEG-2.

The present invention has been conceived in view of the above circumstances, and aims at providing a moving picture coding method, a moving picture decoding method and the like by which pictures which need to be decoded for variable speed reproduction can be easily specified and coding and decoding suitable for variable speed reproduction can be performed.

### Disclosure of Invention

In order to achieve this object, the moving picture coding method according to the present invention is a moving picture coding method for coding a moving picture signal on a picture-by-picture basis and generating a bit stream, comprising: an information creation step of creating variable speed reproduction information for specifying pictures to be reproduced at variable speed; and a coding step of coding the variable speed reproduction information and adding said information to the bit stream.

Accordingly, since pictures which are to be reproduced at a desired variable speed can be specified based on variable speed reproduction information when the variable speed reproduction is performed, and thus, by decoding only the specified pictures, the variable speed reproduction can be realized easily without decoding unnecessary pictures.

Here, in the information creation step, the variable speed reproduction information may be created for each random access unit that is made up of a plurality of pictures, said random access unit being a unit in which a current picture to be decoded can be decoded with reference to another picture only in the random access unit.

Accordingly, pictures which are to be reproduced at a desired variable speed can be specified based on the variable speed reproduction information when the variable speed reproduction is performed, even if a reference structure between the pictures in each random access unit differs from each other.

The above-mentioned moving picture coding method may further comprise a detection step of detecting whether common information needs to be coded or not, said common information being referred to by the pictures to be reproduced at variable speed; and a common information addition step of adding the common information to the pictures when it is detected in the detection step that said information needs to be coded.

Accordingly, even if common information has already been added to pictures which are to be reproduced at slower than N times speed, the common information can also always be added to pictures which are to be reproduced at N times speed if the pictures require the common information. Therefore, it is possible to avoid the situation in which there is no common information to be referred to when the variable speed reproduction is performed.

Also, the moving picture decoding method according to the present invention is a moving picture decoding method for decoding a bit stream on a picture-by-picture basis, comprising: an information extraction step of extracting variable speed reproduction information for specifying pictures to be reproduced at variable speed; and a decoding step of decoding the variable speed reproduction information and specifying and decoding the pictures to be reproduced at variable speed based on the variable speed reproduction information.

Accordingly, pictures which are to be reproduced at a desired variable speed can be specified based on the variable speed reproduction information when the variable speed reproduction is performed, and thus, by decoding only the specified pictures, the variable speed reproduction can be realized easily without decoding unnecessary pictures.

Here, in the information extraction step, the variable speed reproduction information may be extracted from each random access unit that is made up of a plurality of pictures, said random access unit being a unit in which a current picture to be decoded can be decoded with reference to another picture only in the random access unit.

Accordingly, pictures which are to be reproduced at a desired variable speed can be specified based on the variable speed reproduction information when the variable speed reproduction is performed, even if a reference structure between the pictures in each random access unit differs from each other.

In addition, the above-mentioned moving picture decoding method may further comprise a memory control step of controlling a picture on the assumption that the picture is stored in a picture memory when the reproduction is performed at variable speed, said picture being not to be reproduced at variable speed but referred to by another picture.

Accordingly, even if a reference picture is specified relatively, it can be avoided that the picture specified as a reference picture for a current picture to be decoded for variable speed reproduction differs from a reference picture used for the current picture when it has been coded.

The present invention can be realized not only as the above-mentioned moving picture coding method and moving picture decoding method, but also as a moving picture coding apparatus and a moving picture decoding apparatus including, as units, characteristic steps included in these moving picture coding method and moving picture decoding method. Or, the present invention can be realized as a program causing a computer to execute those steps, or as a bit stream obtained by coding using the moving picture coding method. It is needless to say that the program and the bit stream can be distributed via a recording medium such as a CD-ROM and a transmission medium such as the Internet.

As described above, the moving picture coding method and the moving picture decoding method according to the present invention allows easy specification of pictures which need to be decoded for variable speed reproduction in a random access unit RAU, so coding and decoding suitable for the variable speed reproduction can be easily realized, and thus its practical value is extremely high.

### Brief Description of Drawings

FIG. 1A and FIG. 1B are structure diagrams of a conventional MPEG-2 stream, and more specifically, FIG. 1A shows a sequence of pictures and FIG. 1B shows a hierarchical structure of the stream.
FIG. 2 is a diagram showing a hierarchical structure of another conventional stream.
FIG. 3 is a block diagram showing a structure of a moving picture coding apparatus that realizes a conventional moving picture coding method.
FIG. 4 is a block diagram showing a structure of a moving picture decoding apparatus that realizes a conventional moving picture decoding method.
FIG. 5A and FIG. 5B are schematic diagrams showing examples of reference relationships between pictures, and more specifically, FIG. 5A is an example of inter picture prediction structure of MPEG-2 and FIG. 5B is an example of prediction structure of JVT.
FIG. 6 is a schematic diagram showing an example of reference relationship between pictures.
FIG. 7 is a block diagram showing a structure of a moving picture coding apparatus that realizes a moving picture coding method according to the present invention.
FIG. 8A - FIG. 8D are structure diagrams of streams (in a first embodiment) of the present invention, and more specifically, FIG. 8A is an example of a structure of a random access unit RAU, FIG. 8B is an example of a variable speed reproduction map RAM, FIG. 8C is another example of the variable speed reproduction map RAM, and FIG. 8D is still another example of the variable speed reproduction map RAM.
FIG. 9A - FIG. 9C are schematic diagrams showing examples of reference relationships between pictures (in the first embodiment), and more specifically, FIG. 9A is an example of reference relationship between pictures, FIG. 9B is another example of reference relationship between pictures, and FIG. 9C is still another example of reference relationship between pictures.
FIG. 10 is a flowchart showing an operation for creating a variable speed reproduction map RAM.
FIG. 11 is a flowchart showing an operation for adding a picture parameter set PPS.
FIG. 12 is a flowchart showing an operation for coding a current picture.
FIG. 13A and FIG. 13B are diagrams of a structure of a stream (in a second embodiment) of the present invention, and more specifically, FIG. 13A is an example of a structure of a random access unit RAU and FIG. 13B is an example of a variable speed reproduction map table RAMTBL.
FIG. 14 is a flowchart showing an operation for creating a variable speed reproduction map identifier RAMID.
FIG. 15 is a block diagram showing a structure of a moving picture decoding apparatus that realizes a moving picture decoding method of the present invention.
FIG. 16A and FIG. 16B are flowcharts showing operations of the moving picture decoding apparatus, and more specifically, FIG. 16A is a flowchart showing an operation for the structure of the stream as shown in the first embodiment and FIG. 16B is a flowchart showing an operation for the structure of the stream as shown in the second embodiment.
FIG. 17A - FIG. 17C are schematic diagrams showing how a picture memory stores pictures, and more specifically, FIG. 17A shows the stored pictures for normal speed reproduction, FIG. 17B shows the stored pictures for conventional quad-speed reproduction, and FIG. 17C shows the stored pictures for quad-speed reproduction of the present invention.
FIG. 18 is a flowchart showing an operation for decoding a current picture.
FIG. 19A and FIG. 19B are flowcharts showing other operations of the moving picture decoding apparatus, and more specifically, FIG. 19A is a flowchart showing an operation for the structure of the stream as shown in the first embodiment and FIG. 19B is a flowchart showing an operation for the structure of the stream as shown in the second embodiment.

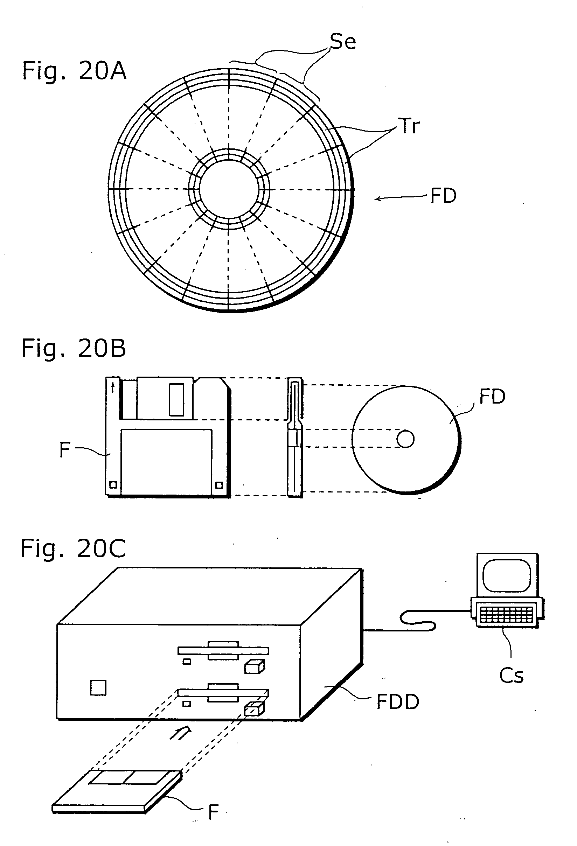

FIG. 20A - FIG. 20C are illustrations of a recording medium for storing a program for realizing the moving picture coding method and the moving picture decoding method in each of the embodiments using a computer system, and more specifically, FIG. 20A is an illustration showing a physical format of a flexible disk as a main unit of the recording medium, FIG. 20B is an illustration showing a front view of the appearance of a flexible disk, a cross-sectional view of the flexible disk and the flexible disk itself, and FIG. 20C is an illustration showing a configuration for recording and reproducing the above program on and from the flexible disk FD.
Fig. 21 is a block diagram showing an overall configuration of a content supply system that realizes a content distribution service.
Fig. 22 is a diagram showing an example of a mobile phone.
Fig. 23 is a block diagram showing an internal structure of the mobile phone.
Fig. 24 is a block diagram showing an overall configuration of a digital broadcasting system.

### Best Mode for Carrying Out the Invention

Too flexible prediction structure of JVT makes variable speed reproduction difficult. So if it can be known which type of prediction structure has been used for pictures in a random access unit RAU before decoding the random access unit RAU, more than two types of variable speed reproduction can be realized, as shown in respective examples in FIG. 5A, FIG. 5B and FIG. 6.

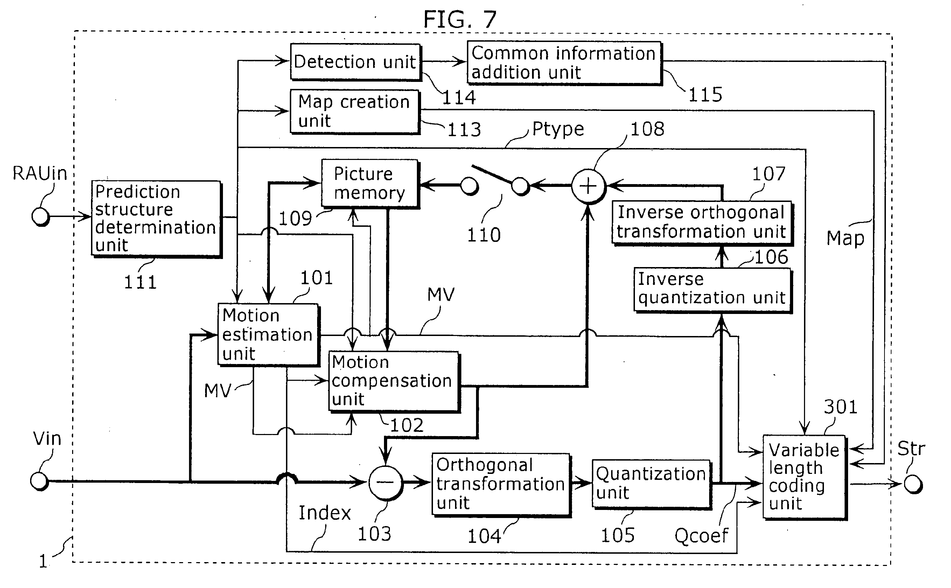

The embodiments of the present invention will be explained below with reference to FIG. 7 - FIG. 24.

A random access unit RAU used for explanation in the embodiments does not necessarily need to be a special unit for JVT, but may be a set of pictures starting with an intra coded picture (I-picture) because a parameter set PS is placed in each random access unit RAU.

### (First Embodiment)

FIG. 7 is a block diagram showing a structure of a moving picture coding apparatus in an embodiment using a moving picture coding method according to the present invention. Note that the same reference numbers are assigned to the units that operate in the same manner as the units in the conventional moving picture coding apparatus 3 as shown in FIG. 3, and the explanation thereof is omitted.

A moving picture coding apparatus 1 is an apparatus for compressing and coding an inputted picture signal Vin to transform it into a bit stream by performing variable length coding or the like, and outputting the bit stream Str, and includes the motion estimation unit 101, the motion compensation unit 102, the subtraction unit 103, the orthogonal transformation unit 104, the quantization unit 105, the inverse-quantization unit 106, the inverse orthogonal transformation unit 107, the addition unit 108, the picture memory 109, the switch 110, the prediction structure determination unit 111, the variable length coding unit 112, a map creation unit 113, a detection unit 114 and a common information addition unit 115.

The map creation unit 113 creates variable speed reproduction information Map necessary for variable speed reproduction (for example, a variable speed reproduction map RAM, a variable speed reproduction map table RAMTBL, or a variable speed reproduction map identifier RAMID to be described later) according to a picture type Ptype, and outputs it to the variable length coding unit 112. The variable length coding unit 112 codes the variable speed reproduction information Map and places it into a bit stream Str.

When a current picture to be coded is a picture to be reproduced (decoded) at N times or faster speed, the detection unit 114 judges whether or not a picture parameter set PPS that is common information referred to by the current picture has already been coded when coding another picture to be reproduced at N times or faster speed, and detects the need of coding the picture parameter set PPS. The common information addition unit 115 adds the picture parameter set PPS to the current picture if the need of coding is detected by the detection unit 114.

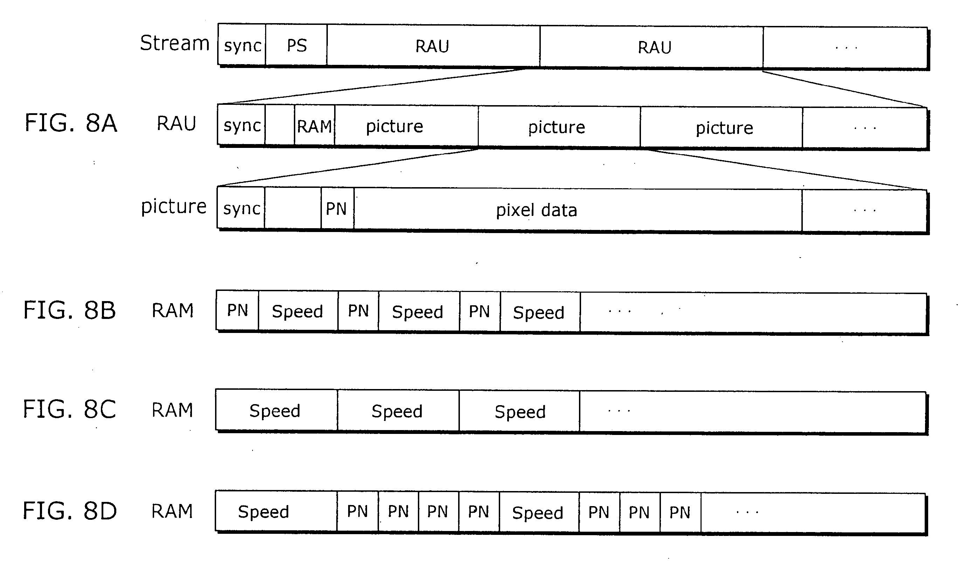

FIG. 8A - FIG. 8D are structure diagrams of streams in the first embodiment. This structure is different from that of the conventional stream in FIG. 2 in that a variable speed reproduction map RAM is placed in the random access unit RAU.

FIG. 8A shows an example of the structure of the random access unit RAU. In this structure example, the variable speed reproduction map RAM is placed before pictures in the random access unit RAU, and information indicating the stream of which picture needs to be decoded for desired variable speed reproduction is described in the variable speed reproduction map RAM. The moving picture decoding apparatus decodes only the pictures necessary for desired variable speed reproduction according to the information described in the variable speed reproduction map RAM, and thus allows variable speed reproduction easily without decoding unnecessary pictures.

FIG. 8B is an example of the variable speed reproduction map RAM. Reproduction speed required for decoding a picture is described in the variable speed reproduction map RAM for each picture number that is a picture identifier in the random access unit RAU. In other words, information indicating reproduction speed required for decoding the picture (Speed) is described following each number of the picture PN. As a result, it can be known easily which picture needs to be decoded at a desired reproduction speed. Note that all the picture numbers PN may be placed together at the head of the random access unit RAU and all the information indicating reproduction speed required for decoding (Speed) may be placed together following the picture numbers PN.

FIG. 8C is another example of the variable speed reproduction map RAM. Reproduction speeds required for decoding respective pictures in the random access unit RAU are described in sequence. As a result, picture numbers PN do not necessarily need to be placed in the variable speed reproduction map RAM, and thus space required for placing the picture numbers PN can be saved.

FIG. 8D is still another example of the variable speed reproduction map RAM. The information indicating reproduction speed required for decoding (Speed) is placed first, and following that, picture numbers PN of pictures necessary for reproduction at that speed is described.

The information indicating reproduction speed required for decoding (Speed) is described as "N" if it is described in that information that a picture M needs to be decoded at N times speed. In a case of N<K where the reproduction speed is K, the picture M does not need to be decoded, whereas it needs to be decoded in a case of N>=K.

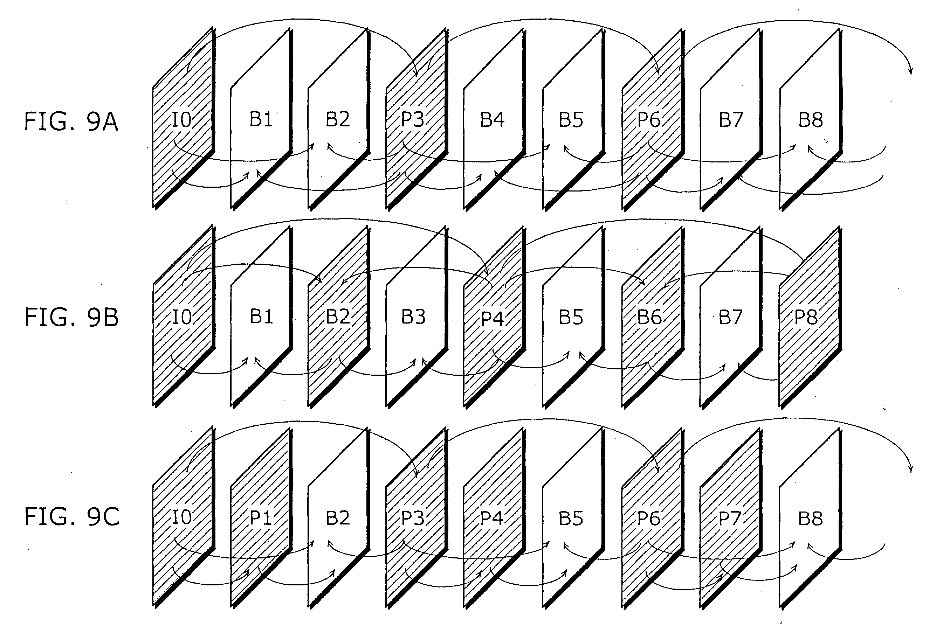

FIG. 9A - FIG. 9C are schematic diagrams showing examples of reference relationships between pictures. Here, the diagonally shaded pictures are referred to by other pictures.

In the example as shown in FIG. 9A, the pictures I0, P3 and P6 are reproduced at triple speed. In the example as shown in FIG. 9B, the pictures I0 and P4 are reproduced at quad speed, and the pictures I0, B2, P4 and B6 are reproduced at double speed. In the example as shown in FIG. 9C, the pictures I0, P3 and P6 are reproduced at triple speed, and the pictures I0, P1, P3, P4, P6 and P7 are reproduced at 1.5 times speed.

Therefore, the information indicating reproduction speed required for decoding (Speed) is "3" for the pictures I0, P3 and P6 and "1" for the other pictures in the example of FIG. 9A, "4" for the pictures 10 and P4, "2" for the pictures B2 and B6 and "1" for the other pictures in the example of FIG. 9B, and "3" for the pictures I0, P3 and P6, "1.5" for the pictures P1, P4 and P7 and "1" for the other pictures in the example of FIG. 9C.

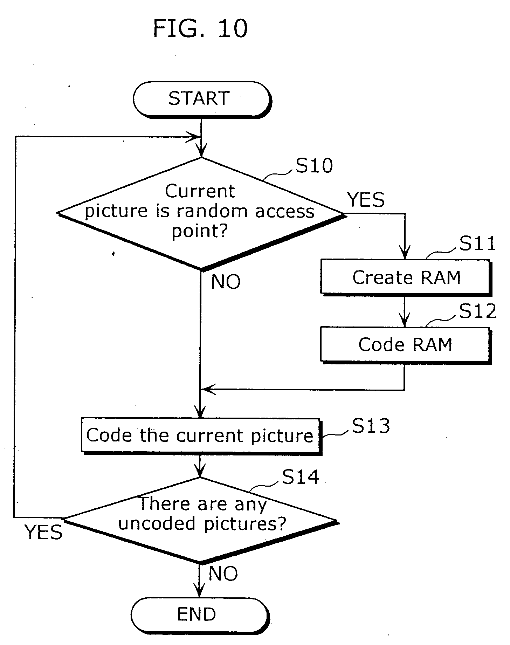

Next, the operation of the moving picture coding apparatus 1 structured as mentioned above will be explained. FIG. 10 is a flowchart showing the operation for creating a variable speed reproduction map RAM.

The map creation unit 113 judges whether or not a current picture to be coded is a picture at a random access point, namely, the first picture in the random access unit RAU (Step S10). If it is the picture at the random access point as a result of the judgment (YES in Step S10), the map creation unit 113 creates a variable speed reproduction map RAM and outputs it to the variable length coding unit 112 (Step S11). Next, the variable length coding unit 112 codes the variable speed reproduction map RAM (Step S12). The variable length coding unit 112 further codes the current picture (Step S13).

On the other hand, if the current picture is not a picture at a random access point as a result of the judgment (NO in Step S10), the variable length coding unit 112 codes the current picture (Step S13).

Next, it is judged whether there are any uncoded pictures or not (Step S14), the above operation (Step S10 - Step S14) is repeated if there are any uncoded pictures, and the processing is ended if there is no uncoded picture.

By the way, when decoding the bit stream Str, a picture parameter set PPS is referred to for decoding, as mentioned above. When the picture parameter set PPS was changed, this new picture parameter set PPS has already been sent as a bit stream Str before data of a reference picture. However, variable speed reproduction causes a situation where this changed new picture parameter set PPS does not exist when decoding a picture which should refer to this new picture parameter set PPS. For example, in the example as shown in FIG. 9B, the pictures 10, P4, B2, B1, B3, P8, B6, B5 and B7 are coded in this order. It is assumed here that a picture parameter set PPS is changed in the picture B2 and the changed new picture parameter set PPS is added to the data of the picture B2 referring to that new picture parameter set PPS. In this case, there is no problem in reproduction at normal speed and double speed. However, for quad-speed reproduction, for example, the pictures I0, P4 and P8 are reproduced but the picture B2 is not decoded, and thus the changed new picture parameter set PPS is not decoded, too. Therefore, the picture parameter set PPS that should be referred to by the picture P8 has not been decoded, a problem that the picture P8 cannot be decoded occurs.

Against this backdrop, in the present embodiment, when a picture parameter set PPS is necessary for a picture which is to be reproduced at N times speed, it is always added to that picture to be reproduced at N times speed even if it has been added to a picture which is to be reproduced at slower speed than N. In other words, in the above example, the new picture parameter set PPS changed in the picture B2 is also added to the data of the picture P8.

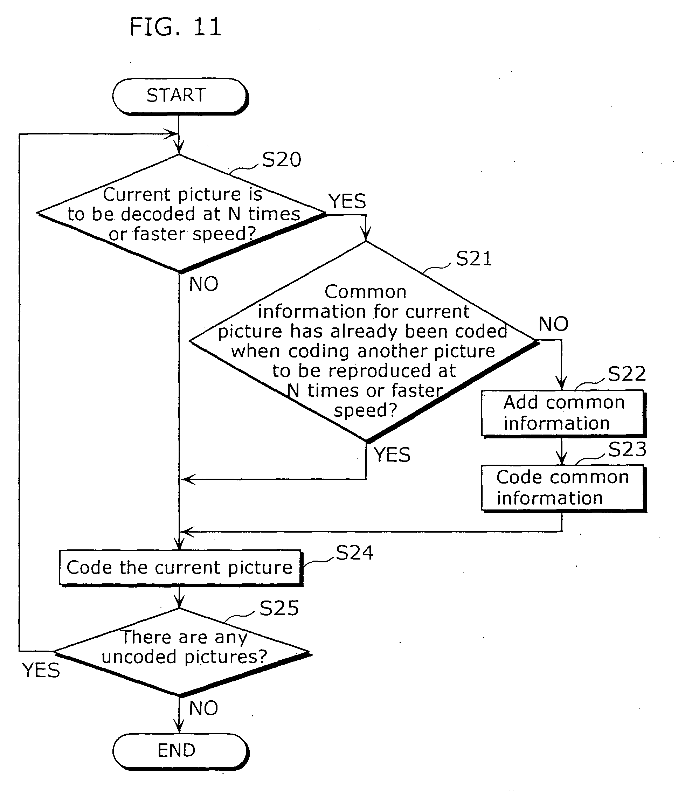

FIG. 11 is a flowchart showing an operation for adding a picture parameter set PPS.

The detection unit 114 judges whether or not a current picture to be coded is to be reproduced (decoded) at N times or faster speed (Step S20). When the current picture is to be reproduced at N times or faster speed as a result of the judgment (YES in Step S20), it is judged whether or not a picture parameter set PPS referred to by the current picture has already been coded when coding a picture which is to be reproduced at N times or faster speed (Step S21). Here, the picture parameter set PPS has not yet been coded when coding the picture to be reproduced at N times or faster speed (NO in Step S21), the common information addition unit 115 outputs the picture parameter set PPS to the variable length coding unit 112 in order to add it to the current picture (Step S22). Next, the variable length coding unit 112 codes the picture parameter set PPS (Step S23). The variable length coding unit 112 further codes the current picture (Step S24).

On the other hand, when the picture is not to be reproduced at N times or faster speed as a result of the above judgment (NO in Step S20), and when the picture parameter set PPS which is referred to by the current picture has already been coded when coding the picture to be reproduced at N times or faster speed (YES in Step S21), the variable length coding unit 112 codes the current picture (Step S24).

Next, it is judged whether there are any uncoded pictures or not (Step S25), and the above operation (Steps S20 - S25) is repeated if there are any, and the processing is ended if there is no uncoded picture.

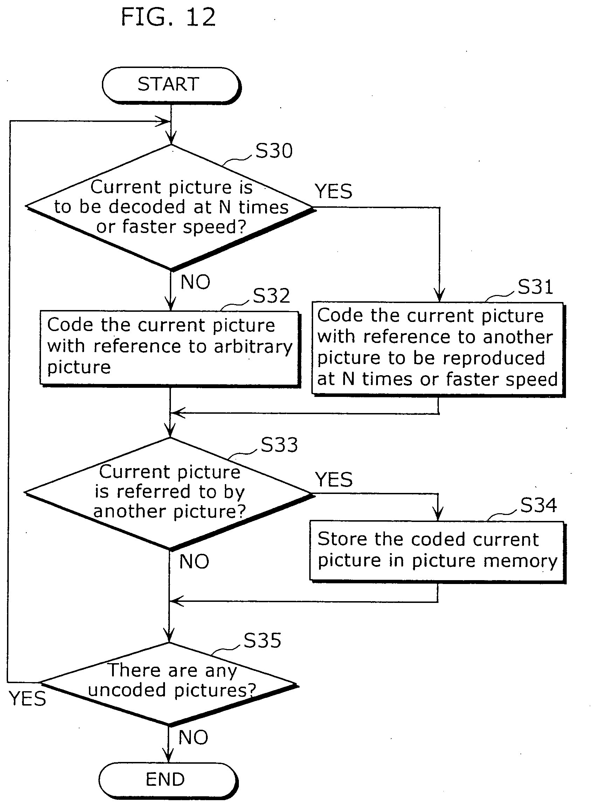

FIG. 12 is a flowchart showing an operation for coding a current picture.

The detection unit 114 judges whether or not a current picture to be coded is to be reproduced (decoded) at N times or faster speed (Step S30). When the current picture is to be reproduced at N times or faster speed as a result of the judgment (YES in Step S30), it is coded with reference to a picture to be reproduced at N times or faster speed (Step S31). On the other hand, when the current picture is not to be reproduced at N times or faster speed (NO in Step S30), it is coded with reference to an arbitrary picture (Step S32).

Next, it is judged whether or not the current picture is referred to when coding another picture (Step S33). When the current picture is referred to by another picture as a result of the judgment (YES in Step S33), it is stored in the picture memory 109 (Step S34). On the other hand, when the current picture is not referred to by another picture (NO in Step S33), it is not stored in the picture memory 109.

Next, it is judged whether there are any uncoded pictures or not (Step S35), the above operation (Steps S30 - S35) is repeated if there are any uncoded pictures, and the processing is ended if there is no uncoded picture.

As described above, a variable speed reproduction map RAM is placed before pictures in a random access unit RAU, and information indicating which picture stream should be decoded for desired variable speed reproduction is described in the variable speed reproduction map RAM. Even if a picture parameter set PPS has already been added to a picture to be reproduced at less than N times speed, the picture parameter set PPS is also always added to a picture to be reproduced at N times speed if it is necessary for that picture to be reproduced at N times speed. Therefore, the moving picture decoding apparatus decodes only pictures necessary for desired variable speed reproduction according to the information described in the variable speed reproduction map RAM, and thus allows variable speed reproduction easily without decoding unnecessary pictures.

When creating a variable speed reproduction map RAM in the present embodiment, since pictures which are not referred to by other pictures have no influence on decoding the other pictures, the variable speed reproduction map RAM may be created so as to be used for only pictures referred to by other pictures and having influence on the other pictures. Or, something having a function corresponding to the variable speed reproduction map RAM, for example, operation information by category, such as pictures which are not referred to by other pictures, I-pictures, P-pictures and B-pictures, may be placed instead of information of each picture.

Furthermore, identification information indicating that the entire stream is made up of these random access units RAUs that can be easily reproduced at variable speed may be added.

Explanation has been made assuming that a picture M does not need to be decoded in a case of N<K, whereas the picture M needs to be decoded in a case of N>=K, where N is Speed of the picture M (information indicating the speed at which the picture M needs to be decoded) and K is reproduction speed, for example. But the picture M may be decoded even in a case of N<K in order to improve image quality for variable speed reproduction when a difference between N and K is small.

In addition, the above-mentioned information indicating the reproduction speed required for decoding (Speed) may be a value indicating a level of reproduction speed, not a value representing an actual reproduction speed. For example, "1", "2" and "3" can be assigned to pictures necessary for only normal speed reproduction, pictures necessary for faster speed reproduction and pictures necessary for still faster speed reproduction, respectively.

### (Second Embodiment)

The first embodiment shows an example in which variable speed reproduction maps RAMs are placed in respective random access units RAUs, but there is no need to place the variable speed reproduction maps RAMs in the respective random access units RAUs if they have the same contents.

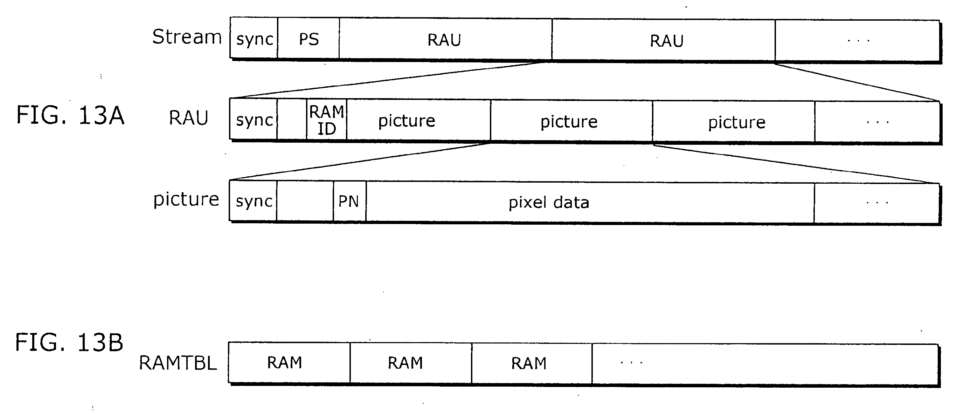

FIG. 13A and FIG. 13B are diagrams of a structure of a stream in the second embodiment.

In the present embodiment, a variable speed reproduction map table RAMTBL, as shown in FIG. 13B, including a plurality of variable speed reproduction maps RAMs based on reference relationships between pictures as shown in FIGs. 9A - 9C, for example, is created. And in each random access unit RAU, a variable speed reproduction map identifier RAMID indicating to which variable speed reproduction map RAM in the variable speed reproduction map table RAMTBL the random access unit RAU corresponds is placed, as shown in FIG. 13A.

The variable speed reproduction map table RAMTBL may be placed at the head of the stream, coded as added information in another stream, or implemented in a device by predetermining values for the table.

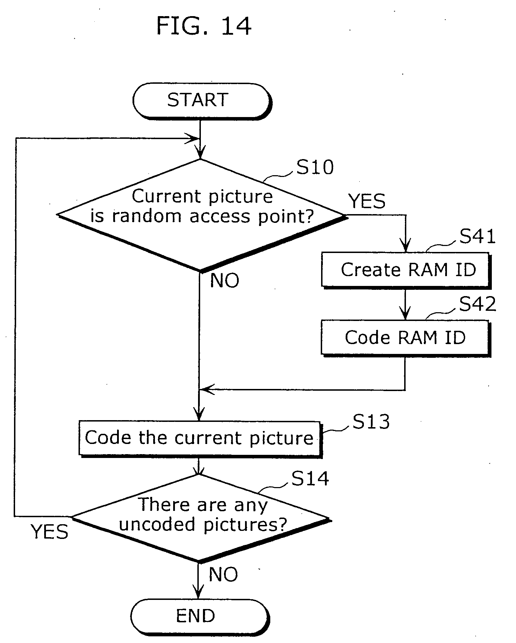

FIG. 14 is a flowchart showing an operation for creating a variable speed reproduction map identifier RAMID. Here, creation and coding of the variable speed reproduction map identifier RAMID are performed (Steps S41 - S42) instead of creation and coding of the variable speed reproduction map RAM in the first embodiment (Steps S11 - S12 in FIG. 10).

As a result of the above creation and coding, what is realized in the first embodiment can also be realized in the present embodiment using the variable speed reproduction map identifier RAMID.

When creating a variable speed reproduction map RAM which is to be included in the variable speed reproduction map table RAMTBL, pictures which are not referred to by other pictures have no influence on decoding of the other pictures, and therefore, variable speed reproduction maps RAMs may be created only for the pictures referred to by the other pictures and having influence on the other pictures. Or, something with a function corresponding to that of the variable speed reproduction map RAM, for example, operation information by category such as pictures which are not referred to by other pictures, I-pictures, P-pictures and B-pictures, may be placed, instead of placing information of each picture.

Furthermore, identification information indicating that the entire stream is made up of these random access units RAU that can be easily reproduced at variable speed may be added.

In the first and second embodiments, variable speed reproduction map RAM and a variable speed reproduction map identifier RAMID are added to each random access unit RAU, but the present invention is not limited to this. For example, all the random access units in the entire stream have the same structure, the variable speed reproduction map RAM and the variable speed reproduction map identifier RAMID may be placed in each stream.

In addition, in the first and second embodiments, only a case where at least one variable speed reproduction map RAM is coded has been explained. But a fixed variable speed reproduction map RAM could be used depending on the operation, and in such a case, the variable speed reproduction map RAM does not need to be coded. In order to allow this operation, it is only necessary to detect in advance the need of coding common information referred to by a current picture to be reproduced at variable speed and to add the common information to the current picture if the need of coding that common information is detected.

### (Third Embodiment)

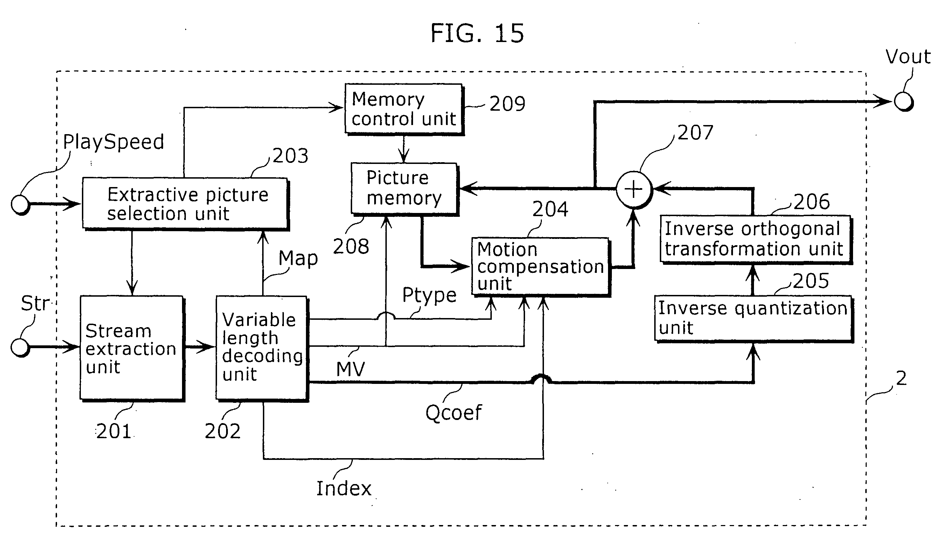

FIG. 15 is a block diagram showing a structure of a moving picture decoding apparatus using a moving picture decoding method according to the present invention. The same reference numbers are assigned to the units that operate in the same manner as those in the conventional moving picture decoding apparatus 4 as shown in FIG. 4 and the explanation thereof is omitted.

A moving picture decoding apparatus 2 is an apparatus for decoding the bit stream Str obtained by coding by the moving picture coding apparatus 1 as mentioned above, and includes a stream extraction unit 201, a variable length decoding unit 202, an extractive picture selection unit 203, a motion compensation unit 204, an inverse quantization unit 205, an inverse orthogonal transformation unit 206, an addition unit 207, a picture memory 208 and a memory control unit 209.

The extractive picture selection unit 203 determines, based on the variable speed reproduction information Map decoded by the variable length decoding unit 202, a picture which needs to be decoded for reproduction at a reproduction speed instructed by reproduction speed information PlaySpeed inputted from outside, and notifies it to the stream extraction unit 201. The stream extraction unit 201 extracts only the stream corresponding to the picture that is judged the need of decoding by the extractive picture selection unit 203 and transmits it to the variable length decoding unit 202. The memory control unit 209 controls pictures referred to by other pictures for variable speed reproduction, assuming that the pictures are stored in the picture memory 208 even if they have not yet been decoded.

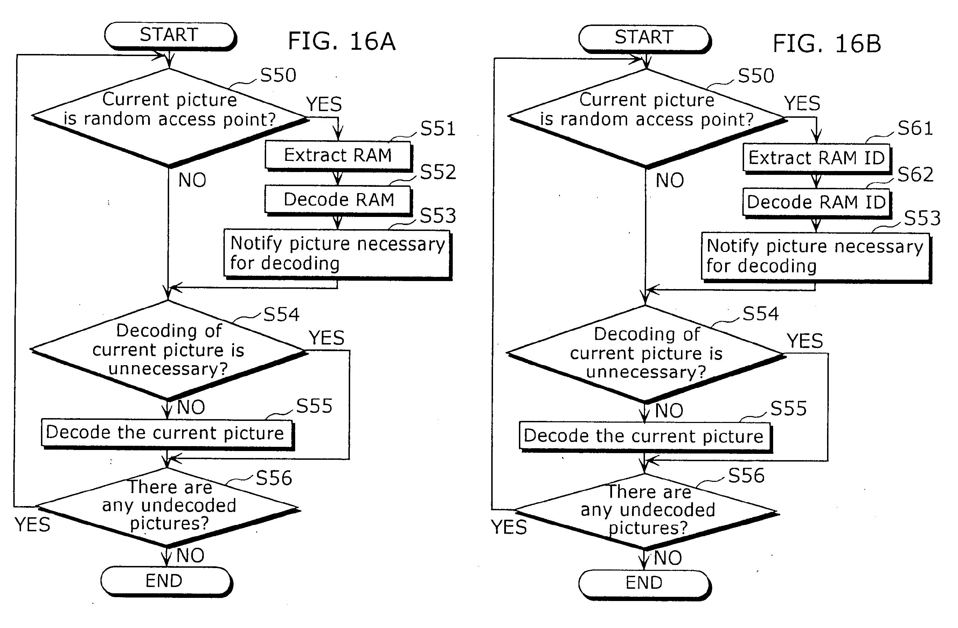

Next, operations of the moving picture decoding apparatus 2 structured as mentioned above will be explained. FIGs. 16A and 16B are flowcharts showing the operations of the moving picture decoding apparatus 2, and more specifically, FIG. 16A shows the operation for the structure of the stream as shown in the first embodiment, and FIG. 16B shows the operation for the structure of the stream as shown in the second embodiment.

When decoding the bit stream Str structured as shown in the first embodiment obtained by coding, the stream extraction unit 201 judges whether or not a current picture to be decoded is a random access point, namely, the first picture in a random access unit RAU (Step S50). When the current picture is a random access point as a result of the judgment (YES in Step S50), the stream extraction unit 201 extracts a variable speed reproduction map RAM and outputs it to the variable length decoding unit 202 (Step S51). Then, the variable length decoding unit 202 decodes the variable speed reproduction map RAM and outputs it to the extractive picture selection unit 203 (Step S52).

Next, the extractive picture selection unit 203 determines, based on the variable speed reproduction map RAM decoded by the variable length decoding unit 202, a picture which needs to be decoded for reproduction at a reproduction speed instructed by the reproduction speed information PlaySpeed inputted from outside, and notifies it to the stream extraction unit 201 (Step S53). The stream extraction unit 201 judges whether or not the extractive picture selection unit 203 determines that decoding of the current picture is unnecessary (Step S54). Here, when the decoding of the current picture is not determined unnecessary (NO in Step S54), the stream extraction unit 201 extracts only the stream corresponding to the current picture and outputs it to the variable length decoding unit 202. The variable length decoding unit 202 decodes the stream corresponding to the inputted picture (Step S55).

Next, it is judged whether there are any undecoded pictures or not (Step S56), and the above operation (Steps S50 - S56) is repeated if there are any undecoded pictures, and the processing is ended if there is no undecoded picture.

When decoding the bit stream Str structured as shown in the second embodiment obtained by coding, if a current picture to be decoded is a picture at a random access point as shown in FIG. 16B (YES in Step S50), the stream extraction unit 201 extracts the variable speed reproduction map identifier RAMID, and outputs it to the variable length decoding unit 202 (Step S61). Then, the variable length decoding unit 202 decodes the variable speed reproduction map identifier RAMID and outputs it to the extractive picture selection unit 203 (Step S62).

Next, the extractive picture selection unit 203 determines, based on the variable speed reproduction map identifier RAMID and the variable speed reproduction map table RAMTBL decoded by the variable length decoding unit 202, a picture which needs to be decoded for reproduction at a reproduction speed instructed by the reproduction speed information PlaySpeed inputted from outside, and notifies it to the stream extraction unit 201 (Step S63). The subsequent operation is same as that of decoding the bit stream Str structured as shown in the first embodiment obtained by coding. Note that it is assumed here that the variable speed reproduction map table RAMTBL has been decoded in advance and included in the extractive picture selection unit 203.

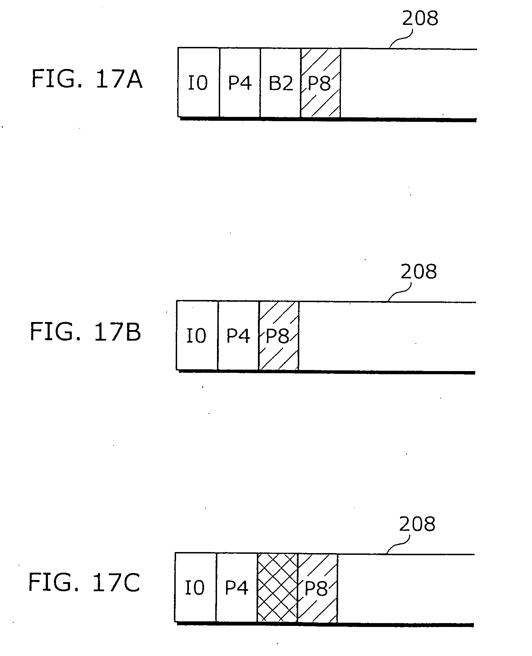

By the way, since a reference picture is specified using a relative reference index Index for decoding a current picture, the picture specified as a reference picture for variable speed reproduction is sometimes different from a reference picture for coding. For example, in the example of the stream as shown in FIG. 9B, when reproducing all the pictures at normal speed, all the reference pictures I0, P4 and B2 are stored in the picture memory 208 as shown in FIG. 17A for decoding the picture P8. On the other hand, in a case of quad-speed reproduction, the pictures I0 and P4 which are to be reproduced (decoded) at quad speed and referred to are stored in the picture memory 208 as shown in FIG. 17B. Therefore, use of a reference index Index specifying the picture P4 referred to by the picture P8 (specifying the 2 preceding picture in the picture memory 208) for quad-speed reproduction results in specification of the picture 10 as shown in FIG. 17B, which brings about an adverse consequence.

Against this backdrop, in the present embodiment, pictures that are not reproduced but referred to by other pictures in a case of variable speed reproduction are always handled assuming that they are stored in the picture memory 208. In other words, in the above example, control is exerted assuming that data is stored following the picture P4, as shown in FIG. 17C.

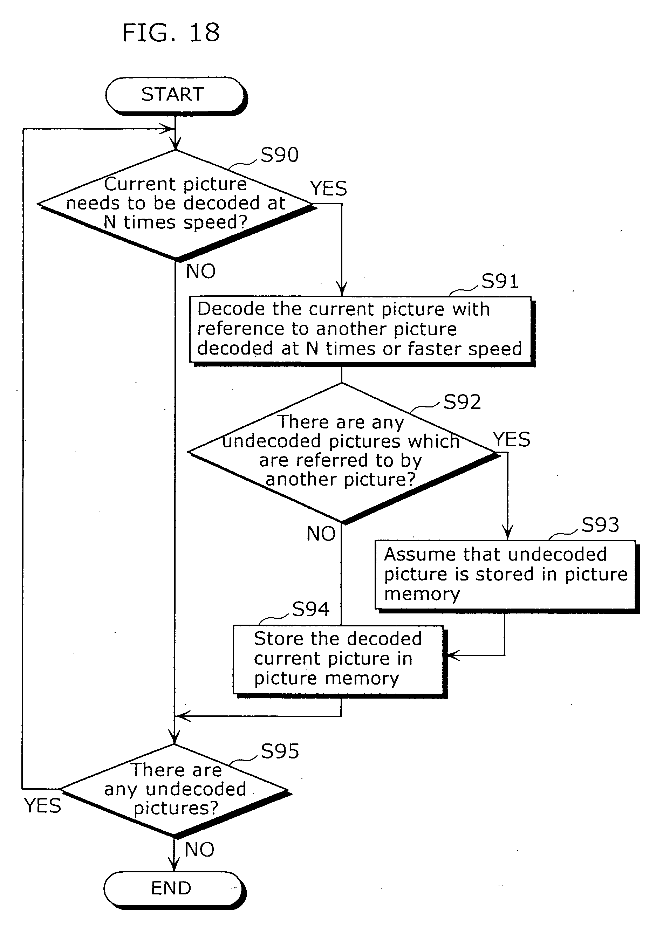

FIG. 18 is a flowchart showing an operation for decoding a current picture. The operation shown in this flowchart corresponds to the processing of judging whether decoding is unnecessary or not, the processing of decoding a current picture and the processing of judging whether there are any undecoded pictures or not (Steps S53 - S56) in the flowchart as shown in FIGs. 16A and 16B.

The stream extraction unit 201 judges whether or not it is determined that the current picture needs to be decoded at N times speed (Step S90). When it is determined that the current picture needs to be decoded (YES in Step S90), the variable length decoding unit 202 decodes the current picture with reference to a picture that has been decoded at N times or faster speed (Step S91). Next, the memory control unit 209 judges whether or not there exists a picture which has not been decoded at N times speed but is to be referred to by another picture (Step S92).

When such a picture exists as a result of this judgment (YES in Step S92), the memory control unit 209 assumes that this picture which has not been decoded at N times speed but is to be referred to by another picture is stored in the picture memory 208 (Step S93). Next, the memory control unit 209 stores the decoded current picture in the picture memory 208 (Step S94).

On the other hand, when there exist no such picture (NO in Step S92), the memory control unit 209 just stores the decoded current picture in the picture memory 208 (Step S94).

Next, it is judged whether there are any undecoded pictures or not (Step S95), the above operation (Steps S90 - S95) is repeated if there are any undecoded pictures, and the processing is ended if there is no undecoded picture. Also, when the current picture does not need to be decoded at N times speed (NO in Step S90), it is judged whether there are any undecoded pictures or not (Step S95), and the above operation (Steps S90 - S95) is repeated if there are any undecoded pictures, and the processing is ended if there is no undecoded picture.

As described above, by decoding, based on the variable speed reproduction information Map, only pictures necessary for desired variable speed reproduction in the bit stream Str obtained by coding as shown in the first and second embodiments, variable speed reproduction can be realized easily without decoding unnecessary pictures.

### (Fourth Embodiment)

In the present embodiment, operations of the moving picture decoding apparatus 2 that are partially different from the operation thereof as shown in the third embodiment will be explained.

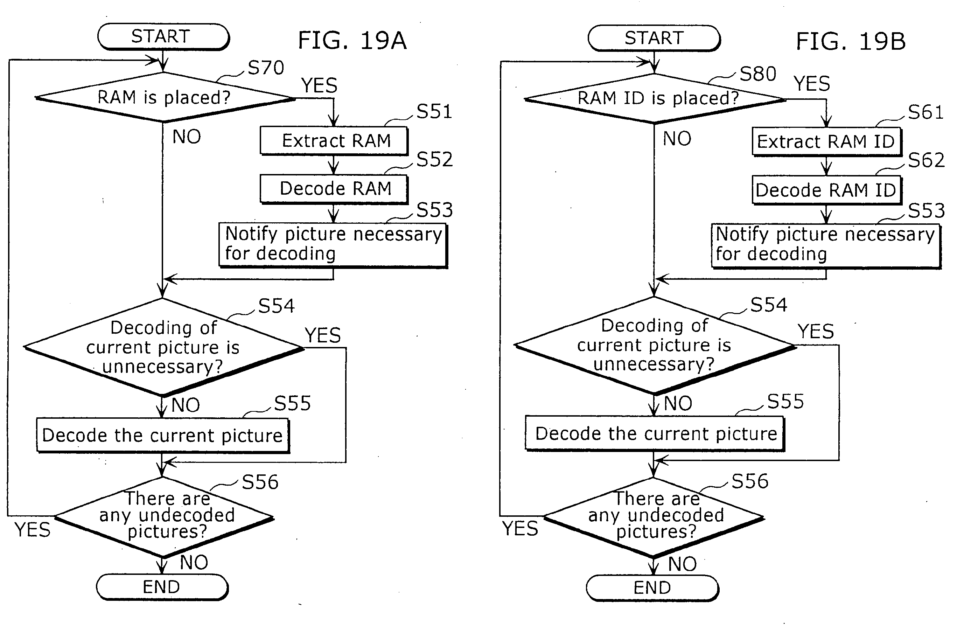

FIG. 19A and FIG. 19B are flowcharts of the operations of the moving picture decoding apparatus 2, and more specifically, FIG. 19A shows an operation for the structure of the stream as shown in the first embodiment and FIG. 19B shows an operation for the structure of the stream as shown in the second embodiment. In FIGs. 19A and 19B, the same step numbers are assigned to the processes same as the processes in the flowchart of FIGs. 16A and 16B and the explanation thereof is omitted.

In the third embodiment, the stream extraction unit 201 judges whether or not a current picture to be decoded is the first picture in a random access unit RAU (Step S50) as shown in FIG. 16A, whereas in the present embodiment, it just judges whether or not a variable speed reproduction map RAM is placed (Step S70) as shown in FIG. 19A. When the variable speed reproduction map RAM is placed as a result of the judgment (YES in S70), the stream extraction unit 201 extracts the variable speed reproduction map RAM and outputs it to the variable length decoding unit 202 (Step S51).

Similarly, in FIG. 16B, the stream extraction unit 201 judges whether or not a current picture to be decoded is the first picture in a random access unit RAU (Step S50), whereas in the present embodiment, it just judges whether a variable speed reproduction map identifier RAMID is placed or not (Step S80) as shown in FIG. 19B. When the variable speed reproduction map identifier RAMID is placed (YES in S80), the stream extraction unit 201 extracts the variable speed reproduction identifier RAMID and outputs it to the variable length decoding unit 202 (Step S61).

As described above, judging whether the variable speed reproduction map RAM or the variable speed reproduction map identifier RAMID is placed or not also allows variable speed reproduction easily without decoding unnecessary pictures, by decoding, based on the variable speed reproduction information Map, only pictures necessary for desired variable speed reproduction in the bit stream Str obtained by coding as shown in the first and second embodiments.

### (Fifth Embodiment)

If a program for realizing the moving picture coding method and the moving picture decoding method as shown in each of the above embodiments is recorded on a memory medium such as a flexible disk, it becomes possible to perform the processing as shown in each of the embodiments easily in an independent computer system.

FIGs. 20A, 20B and 20C are illustrations showing the case where the moving picture coding method and the moving picture decoding method in each of the above embodiments are performed in a computer system using a program recorded on a recording medium such as a flexible disk.

FIG. 20B shows a front view of an appearance of a flexible disk, a cross-sectional view thereof and the flexible disk itself, and FIG. 20A shows an example of a physical format of the flexible disk as a recording medium body. The flexible disk FD is contained in a case F, and a plurality of tracks Tr are formed concentrically on the surface of the disk in the radius direction from the periphery to the inside, and each track is divided into 16 sectors Se in the angular direction. Therefore, as for the flexible disk storing the above-mentioned program, the program is recorded in an area allocated for it on the flexible disk FD.

Fig. 20C shows a structure for recording and reproducing the program on and from the flexible disk FD. When the program for realizing the moving picture coding method and the moving picture decoding method is recorded on the flexible disk FD, the program is written in the flexible disk from the computer system Cs via a flexible disk drive. When the moving picture coding method and the moving picture decoding method are constructed in the computer system by the program on the flexible disk for realizing the moving picture coding method and the moving picture decoding method, the program is read out from the flexible disk using the flexible disk drive and transferred to the computer system.

The above explanation is made on the assumption that a recording medium is a flexible disk, but the same processing can also be performed using an optical disk. In addition, the recording medium is not limited to a flexible disk and an optical disk, but the same processing can be performed using any other medium such as an IC card and a ROM cassette capable of recording a program.

### (Sixth Embodiment)

Furthermore, applications of the moving picture coding method and the moving picture decoding method as shown in the above embodiments and systems using these methods will be explained.

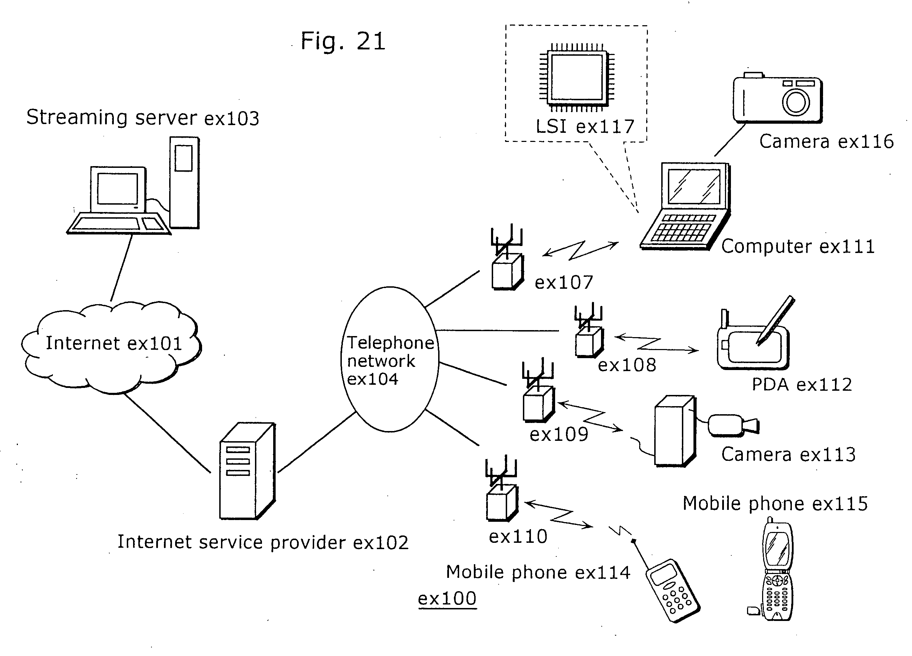

Fig. 21 is a block diagram showing the overall configuration of a content supply system ex100 for realizing a content distribution service. The area for providing communication service is divided into cells of desired size, and base stations ex107 ~ex110 that are fixed wireless stations are placed in respective cells.

In this content supply system ex100, devices such as a computer ex111, a PDA (personal digital assistant) ex112, a camera ex113, a mobile phone ex114 and a camera-equipped mobile phone ex115 are connected to the Internet ex 101 via an Internet service provider ex102, a telephone network ex104 and base stations ex107~ex110.

However, the content supply system ex100 is not limited to the configuration as shown in Fig. 21, and any combination of them may be connected. Also, each device may be connected directly to the telephone network ex104, not through the base stations ex107~ex110.

The camera ex113 is a device such as a digital video camera capable of shooting moving pictures. The mobile phone may be a mobile phone of a PDC (Personal Digital Communications) system, a CDMA (Code Division Multiple Access) system, a W-CDMA (Wideband-Code Division Multiple Access) system or a GSM (Global System for Mobile Communications) system, a PHS (Personal Handyphone system) or the like, and any of them can be used.

A streaming server ex103 is connected to the camera ex113 via the base station ex109 and the telephone network ex104, which allows live distribution or the like using the camera ex113 based on the coded data transmitted from a user. Either the camera ex113 or the server or the like for transmitting the data may code the shot data. Also, the moving picture data shot by a camera ex116 may be transmitted to the streaming server ex103 via the computer ex111. The camera ex116 is a device such as a digital camera capable of shooting still and moving pictures. In this case, either the camera ex116 or the computer ex111 may code the moving picture data. An LSI ex117 included in the computer ex111 or the camera ex116 actually performs coding processing. Software for coding and decoding pictures may be integrated into any type of storage medium (such as a CD-ROM, a flexible disk and a hard disk) that is a recording medium which is readable by the computer ex111 or the like. Furthermore, the camera-equipped mobile phone ex115 may transmit the moving picture data. This moving picture data is the data coded by the LSI included in the mobile phone ex115.

The content supply system ex100 codes contents (such as a music live video) shot by users using the camera ex113, the camera ex116 or the like in the same manner as the above embodiments and transmits them to the streaming server ex103, while the streaming server ex103 makes stream distribution of the contents data to the clients at their request. The clients include the computer ex111, the PDA ex112, the camera ex113, the mobile phone ex114 and so on capable of decoding the above-mentioned coded data. In the content supply system ex100, the clients can thus receive and reproduce the coded data, and further the clients can receive, decode and reproduce the data in real time so as to realize personal broadcasting.

When each device in this system performs coding or decoding, the moving picture coding apparatus or the moving picture decoding apparatus, as shown in each of the above-mentioned embodiments, can be used.

A mobile phone will be explained as an example of the device.

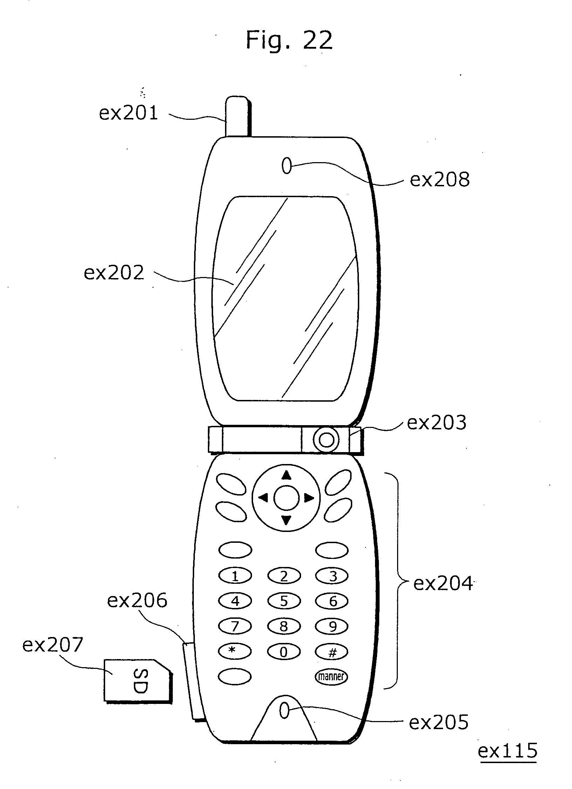

Fig. 22 is a diagram showing the mobile phone ex115 that uses the moving picture coding method and the moving picture decoding method explained in the above embodiments. The mobile phone ex115 has: an antenna ex201 for sending and receiving radio waves to and from the base station ex110; a camera unit ex203 such as a CCD camera capable of shooting video and still pictures; a display unit ex202 such as a liquid crystal display for displaying the data obtained by decoding video and the like shot by the camera unit ex203 and received via the antenna ex201; a body unit including a set of operation keys ex204; a voice output unit ex208 such as a speaker for outputting voices; a voice input unit 205 such as a microphone for inputting voices; a storage medium ex207 for storing coded or decoded data such as data of shot moving or still pictures, data of received e-mails, data of moving or still pictures; and a slot unit ex206 for attaching the storage medium ex207 to the mobile phone ex115. The storage medium ex207 includes a flash memory element, a kind of EEPROM (Electrically Erasable and Programmable Read Only Memory) that is an electrically erasable and rewritable nonvolatile memory, in a plastic case such as an SD card.

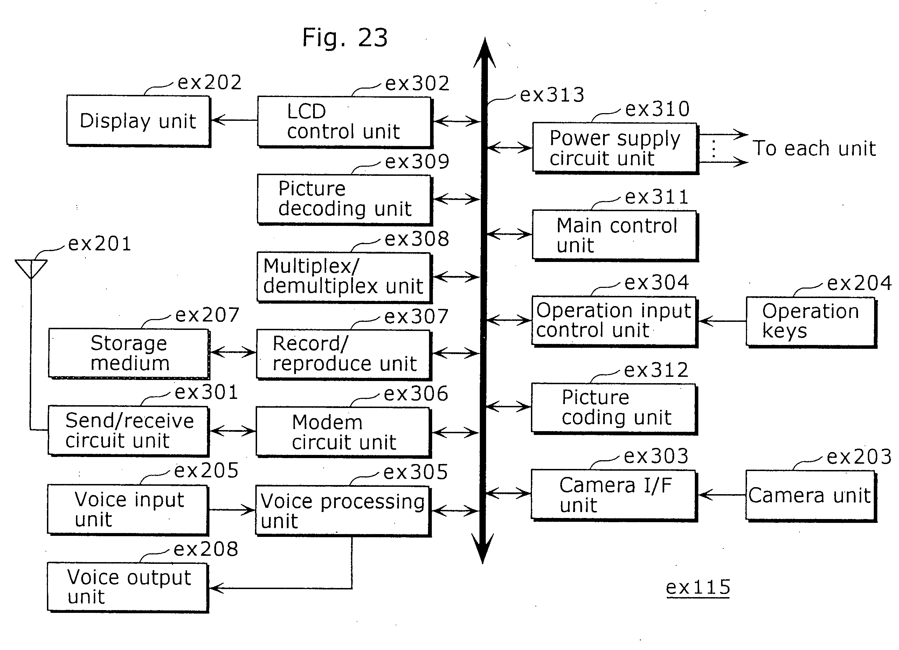

The mobile phone ex115 will be further explained with reference to Fig. 23. In the mobile phone ex115, a main control unit ex311 for overall controlling the display unit ex202 and the body unit including operation keys ex204 is connected to a power supply circuit unit ex310, an operation input control unit ex304, a picture coding unit ex312, a camera interface unit ex303, an LCD (Liquid Crystal Display) control unit ex302, a picture decoding unit ex309, a multiplex/demultiplex unit ex308, a record/reproduce unit ex307, a modem circuit unit ex306 and a voice processing unit ex305, and these units are connected to each other via a synchronous bus ex313.

When a call-end key or a power key is turned ON by a user's operation, the power supply circuit unit ex310 supplies respective units with power from a battery pack so as to activate the camera-equipped digital mobile phone ex115 for making it into a ready state.

In the mobile phone ex115, the voice processing unit ex305 converts the voice signals received by the voice input unit ex205 in voice conversation mode into digital voice data under the control of the main control unit ex311 including a CPU, ROM and RAM or the like, the modem circuit unit ex306 performs spread spectrum processing of the digital voice data, and the send/receive circuit unit ex301 performs digital-to-analog conversion and frequency transform of the data, so as to transmit it via the antenna ex201. Also, in the mobile phone ex115, after the data received by the antenna ex201 in voice conversation mode is amplified and performed of frequency transform and analog-to-digital conversion, the modem circuit unit ex306 performs inverse spread spectrum processing of the data, and the voice processing unit ex305 converts it into analog voice data, so as to output it via the voice output unit 208.

Furthermore, when transmitting e-mail in data communication mode, the text data of the e-mail inputted by operating the operation keys ex204 on the body unit is sent out to the main control unit ex311 via the operation input control unit ex304. After the modem circuit unit ex306 performs spread spectrum processing of the text data and the send/receive circuit unit ex301 performs digital-to-analog conversion and frequency transform for it, the main control unit ex311 transmits the resulting data to the base station ex110 via the antenna ex201.

When picture data is transmitted in data communication mode, the picture data shot by the camera unit ex203 is supplied to the picture coding unit ex312 via the camera interface unit ex303. When the picture data is not transmitted, it is also possible to display the picture data shot by the camera unit ex203 directly on the display unit 202 via the camera interface unit ex303 and the LCD control unit ex302.

The picture coding unit ex312, which includes the moving picture coding apparatus as explained in the present invention, compresses and codes the picture data supplied from the camera unit ex203 by the coding method used for the moving picture coding apparatus as shown in the above embodiments so as to transform it into coded picture data, and sends it out to the multiplex/demultiplex unit ex308. At this time, the mobile phone ex115 sends out the voices received by the voice input unit ex205 during shooting by the camera unit ex203 to the multiplex/demultiplex unit ex308 as digital voice data via the voice processing unit ex305.

The multiplex/demultiplex unit ex308 multiplexes the coded picture data supplied from the picture coding unit ex312 and the voice data supplied from the voice processing unit ex305 by a predetermined method, the modem circuit unit ex306 performs spread spectrum processing of the multiplexed data obtained as a result of the multiplexing, and the send/receive circuit unit ex301 performs digital-to-analog conversion and frequency transform on the data for transmitting via the antenna ex201.

As for receiving data of a moving picture file which is linked to a Web page or the like in data communication mode, the modem circuit unit ex306 performs inverse spread spectrum processing on the data received from the base station ex110 via the antenna ex201, and sends out the multiplexed data obtained as a result of the processing to the multiplex/demultiplex unit ex308.

In order to decode the multiplexed data received via the antenna ex201, the multiplex/demultiplex unit ex308 separates the multiplexed data into a bit stream of picture data and a bit stream of voice data, and supplies the coded picture data to the picture decoding unit ex309 and the voice data to the voice processing unit ex305 respectively via the synchronous bus ex313.

Next, the picture decoding unit ex309, which includes the picture decoding apparatus as explained in the present invention, decodes the bit stream of picture data by the decoding method corresponding to the coding method as shown in the above-mentioned embodiments to generate reproduced moving picture data, and supplies this data to the display unit ex202 via the LCD control unit ex302, and thus moving picture data included in a moving picture file linked to a Web page, for instance, is displayed. At the same time, the voice processing unit ex305 converts the voice data into analog voice data, and supplies this data to the voice output unit ex208, and thus voice data included in a moving picture file linked to a Web page, for instance, is reproduced.

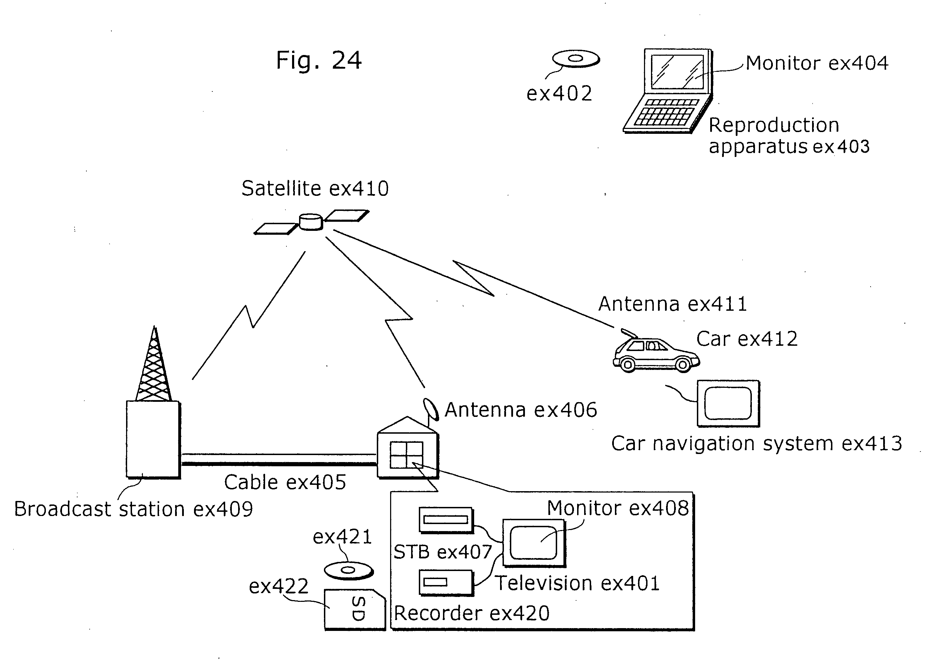

The present invention is not limited to the above-mentioned system, and at least either the moving picture coding apparatus or the moving picture decoding apparatus in the above-mentioned embodiments can be incorporated into a system for digital broadcasting as shown in Fig. 24. Such ground-based or satellite digital broadcasting has been in the news lately. More specifically, a bit stream of video information is transmitted from a broadcast station ex409 to a communication or broadcast satellite ex410 via radio waves. Upon receipt of it, the broadcast satellite ex410 transmits radio waves for broadcasting, a home-use antenna ex406 with a satellite broadcast reception setup receives the radio waves, and a device such as a television (receiver) ex401 or a set top box (STB) ex407 decodes the bit stream for reproduction. The moving picture decoding apparatus as shown in the above-mentioned embodiments can be implemented in the reproduction apparatus ex403 for reading off and decoding the bit stream recorded on a storage medium ex402 that is a recording medium such as a CD and DVD. In this case, the reproduced video signals are displayed on a monitor ex404. It is also conceived to implement the moving picture decoding apparatus in the set top box ex407 connected to a cable ex405 for a cable television or the antenna ex406 for satellite and/or ground-based broadcasting so as to reproduce them on a monitor ex408 of the television. The moving picture decoding apparatus may be incorporated into the television, not in the set top box. Or, a car ex412 having an antenna ex411 can receive signals from the satellite ex410, the base station ex107 or the like for reproducing moving pictures on a display device such as a car navigation system ex413 in the car ex412.

Furthermore, the moving picture coding apparatus as shown in the above-mentioned embodiments can code picture signals for recording them on a recording medium. As a concrete example, there is a recorder ex420 such as a DVD recorder for recording picture signals on a DVD disc ex421 and a disk recorder for recording them on a hard disk. They can be recorded on an SD card ex422. If the recorder ex420 includes the moving picture decoding apparatus as shown in the above-mentioned embodiments, the picture signals recorded on the DVD disc ex421 or the SD card ex422 can be reproduced for display on the monitor ex408.

As the structure of the car navigation system ex413, the structure without the camera unit ex203, the camera interface unit ex303 and the picture coding unit ex312, out of the units shown in Fig. 23, can be conceived. The same applies to the computer ex111, the television (receiver) ex401 and others.

In addition, three types of implementations can be conceived for a terminal such as the above-mentioned mobile phone ex114; a sending/receiving terminal including both an encoder and a decoder, a sending terminal including an encoder only, and a receiving terminal including a decoder only.

As described above, it is possible to use the moving picture coding method or the moving picture decoding method as shown in the above-mentioned embodiments in any of the above-mentioned apparatuses and systems, and using this method, the effects described in the above embodiments can be obtained.

The present invention is not limited to the above-mentioned embodiments, and various changes and modifications may be made without departing from the spirit and scope of the invention.

### Industrial Applicability

As described above, the moving picture coding method and the moving picture decoding method according to the present invention are valuable as methods for coding pictures that make up a moving picture so as to generate a bit stream and decoding the generated bit stream in a mobile phone, a DVD apparatus, a personal computer and the like, for example.

## Claims

1. A moving picture coding method for coding a moving picture signal on a picture-by-picture basis and generating a bit stream, comprising:
an information creation step of creating variable speed reproduction information for specifying pictures to be reproduced at variable speed; and
a coding step of coding the variable speed reproduction information and adding said information to the bit stream.

2. The moving picture coding method according to Claim 1,
wherein in the information creation step, the variable speed reproduction information is created for each random access unit that is made up of a plurality of pictures, said random access unit being a unit in which a current picture to be decoded can be decoded with reference to another picture only in the random access unit.

3. The moving picture coding method according to Claim 1,
wherein in the information creation step, the variable speed reproduction information is created by associating speeds for variable speed reproduction with information specifying the pictures to be reproduced at said speeds respectively.

4. The moving picture coding method according to Claim 3,
wherein in the variable speed reproduction information, the speeds at which the pictures need to be decoded are described respectively according to picture numbers of said pictures.

5. The moving picture coding method according to Claim 3,
wherein in the variable speed reproduction information, the speeds at which the pictures need to be decoded are described respectively in sequence.

6. The moving picture coding method according to Claim 3,
wherein in the variable speed reproduction information, picture numbers of pictures necessary for the reproduction at the speeds are described for each of the speeds.

7. The moving picture coding method according to Claim 1,
wherein in the information creation step, an index is created as the variable speed reproduction information, the index specifying a corresponding reference relationship in a list of predetermined reference relationships.

8. The moving picture coding method according to Claim 7,
wherein the list of predetermined reference relationships is a map table having a plurality of sets of map information in which speeds for variable speed reproduction are associated with information specifying the pictures to be reproduced at said speeds respectively, and
in the information creation step, an identifier for selecting corresponding map information in the map table is created as the variable speed reproduction information.

9. The moving picture coding method according to Claim 8,
wherein in the information creation step, the map table is created, and
in the coding step, the map table is coded and added to the bit stream.

10. The moving picture coding method according to Claim 1, further comprising:
a detection step of detecting whether common information needs to be coded or not, said common information being referred to by the pictures to be reproduced at variable speed; and
a common information addition step of adding the common information to the pictures when it is detected in the detection step that said information needs to be coded.

11. A moving picture decoding method for decoding a bit stream on a picture-by-picture basis, comprising:
an information extraction step of extracting variable speed reproduction information for specifying pictures to be reproduced at variable speed; and
a decoding step of decoding the variable speed reproduction information and specifying and decoding the pictures to be reproduced at variable speed based on the variable speed reproduction information.

12. The moving picture decoding method according to Claim 11,
wherein in the information extraction step, the variable speed reproduction information is extracted from each random access unit that is made up of a plurality of pictures, said random access unit being a unit in which a current picture to be decoded can be decoded with reference to another picture only in the random access unit.

13. The moving picture decoding method according to Claim 11,
wherein in the variable speed reproduction information, speeds for variable speed reproduction are associated with information specifying the pictures to be reproduced at said speeds respectively, and
in the decoding step, the pictures to be reproduced at instructed speeds are specified based on said instructed speeds and the variable speed reproduction information.

14. The moving picture decoding method according to Claim 13,
wherein in the variable speed reproduction information, the speeds at which the pictures need to be decoded are described respectively according to picture numbers of said pictures.

15. The moving picture decoding method according to Claim 13,
wherein in the variable speed reproduction information, speeds at which the pictures need to be decoded are described respectively in sequence.

16. The moving picture decoding method according to Claim 13,
wherein in the variable speed reproduction information, picture numbers of pictures necessary for the reproduction at the speeds are described for each of said speeds.

17. The moving picture decoding method according to Claim 11,
wherein the variable speed reproduction information is an index specifying a corresponding reference relationship in a list of predetermined reference relationships, and
in the decoding step, the corresponding reference relationship is specified in the list of predetermined reference relationships based on the index.

18. The moving picture decoding method according to Claim 17,
wherein the list of predetermined reference relationships is a map table having a plurality of sets of map information in which speeds for variable speed reproduction are associated with information specifying the pictures to be reproduced at said speeds respectively,
the index is an identifier for selecting corresponding map information in the map table, and
in the decoding step, the pictures to be reproduced at instructed speeds are specified based on said instructed speeds, the map table and the identifier.

19. The moving picture decoding method according to Claim 18,
wherein in the information extraction step, the map table is extracted, and
in the decoding step, the map table is decoded.

20. The moving picture decoding method according to Claim 11,
further comprising a memory control step of controlling a picture on the assumption that the picture is stored in a picture memory when the reproduction is performed at variable speed, said picture being not to be reproduced at variable speed but referred to by another picture.

21. A moving picture coding apparatus for coding a moving picture signal on a picture-by-picture basis and generating a bit stream, comprising:
an information creation unit operable to create variable speed reproduction information for specifying pictures to be reproduced at variable speed; and
a coding unit operable to code the variable speed reproduction information and adding said information to the bit stream.

22. A moving picture decoding apparatus for decoding a bit stream on a picture-by-picture basis, comprising:
an information extraction unit operable to extract variable speed reproduction information for specifying pictures to be reproduced at variable speed; and
a decoding step operable to decode the variable speed reproduction information and specifying and decoding the pictures to be reproduced at variable speed based on the variable speed reproduction information.

23. A program for coding a moving picture signal on a picture-by-picture basis and generating a bit stream, the program causing a computer to execute:
an information creation step of creating variable speed reproduction information for specifying pictures to be reproduced at variable speed; and
a coding step of coding the variable speed reproduction information and adding said information to the bit stream.

24. A program for decoding a bit stream on a picture-by-picture basis, the program causing a computer to execute:
an information extraction step of extracting variable speed reproduction information for specifying pictures to be reproduced at variable speed; and
a decoding step of decoding the variable speed reproduction information and specifying and decoding the pictures to be reproduced at variable speed based on the variable speed reproduction information.

25. A bit stream that is generated by coding a moving picture signal on a picture-by-picture basis, comprising variable speed reproduction information for specifying pictures to be reproduced at variable speed.
